# EUROPEAN PATENT APPLICATION

(11) **EP 2 650 838 A1**
(43) Date of publication of application: **16.10.2013**
(21) Application number: 10860564.3
(22) Date of filing: 10.12.2010
(51) Int. Cl.: G06Q 50/00

(54) **VEHICLE-USE INFORMATION COLLECTION SYSTEM**

(71) Applicant: Toyota Jidosha Kabushiki Kaisha, Toyota-shi, Aichi 471-8571 (JP)
(72) Inventor: NAKAO Koichi, Toyota-shi Aichi 471-8571 (JP); MATSUMURA Takeshi, Toyota-shi Aichi 471-8571 (JP); HIKITA Toshiro, Toyota-shi Aichi 471-8571 (JP)
(74) Representative: Winter, Brandl, Fürniss, Hübner, Röss, Kaiser, Polte - Partnerschaft
(86) International application number: PCT/JP2010/072264
(87) International publication number: WO 2012/077234

(57) **Abstract**

Disclosed is a vehicular information collection system 1A which collects information from a vehicle. The vehicular information collection system 1A includes vehicle information output means 11 for outputting vehicle information to a collection destination 20A (21A), presentation means 12, 14, and 18 for presenting a query relating to sensory evaluation based on the vehicle information output from the vehicle information output means to a driver, receiving means 13, 15, and 18 for receiving a driver's reply to the query presented by the presentation means, and reply output means 11 for outputting the driver's reply received by the receiving means to the collection destination. With this configuration, a query relating to sensory evaluation based on vehicle information is presented to request a reply from the driver, thereby collecting vehicle information taking the sensory evaluation of the driver into consideration.

## Description

### Technical Field

The present invention relates to a vehicular information collection system which collects information from a vehicle.

### Background Art

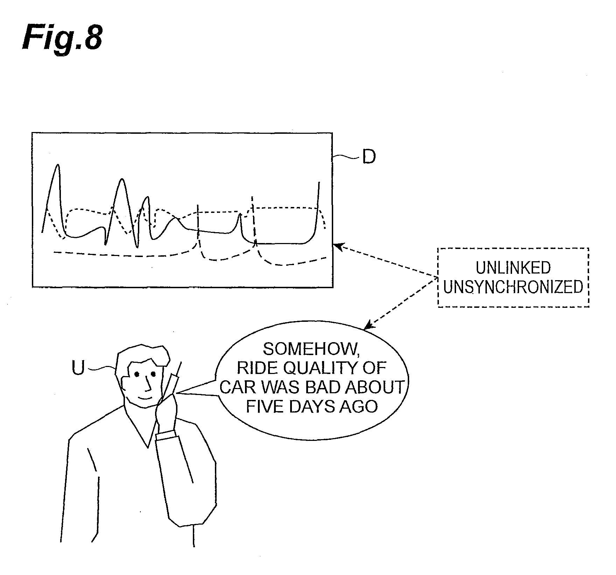

In a vehicle manufacturer's center, a system which collects various kinds of data from a number of traveling vehicles and analyzes the collected vehicle data is being developed. In particular, in order to use the collected vehicle data for the sake of improving ride quality or the like, it is preferable that the sensory evaluation (for example, sense of discomfort) of the driver is associated with the collected vehicle data. However, as shown in Fig. 8, even if a driver U feels a sense of discomfort with ride quality or the like and contacts a dealer or the like by telephone, it is impossible for the vehicle manufacturer's center or the dealer to link the sensory evaluation of the driver U with data D collected a few days in advance. In this case, it is impossible for the vehicle manufacturer's center or the dealer to synchronously analyze vehicle data and the sensory function of the driver. Accordingly, in a system described in Patent Literature 1, when a driver of a vehicle senses an abnormality and presses a vehicle traveling information transmission button, data relating to the traveling conditions of the vehicle acquired by various sensors is transmitted to a management center, the driver gives notification of the details of the inconvenience by mobile phone, and data received by the management center is stored in association with the details of the inconvenience of the driver.

### Citation List

### Patent Literature

[Patent Literature 1] Japanese Unexamined Patent Application Publication No. 2008-216113
[Patent Literature 2] Japanese Unexamined Patent Application Publication No. 10-24784
[Patent Literature 3] Japanese Unexamined Patent Application Publication No. 2010-128099
[Patent Literature 4] Japanese Unexamined Patent Application Publication No. 2007-156949

### Non Patent Literature

[Non-Patent Literature 1] "Windows (Registered Trademark) Server 2008 Error Report", [online], Microsoft, [Search on October 21, 2010], Internet <URL: http://technet.microsoft.com/ja-jp/library/cc754364(WS.10).aspx>

### Summary of Invention

### Technical Problem

As in the above-described system, if vehicle data is transmitted to the center when the driver presses the transmission button, data to be transmitted and the transmission timing are left up to the independent decision of the driver. For this reason, a sufficient amount of data which is required by the vehicle manufacturer cannot be collected, and the driver does not necessarily transmit data at the timing desired by the vehicle manufacturer.

Accordingly, an object of the invention is to provide a vehicular information collection system which is capable of collecting vehicle information taking the sensory evaluation of the driver into consideration.

### Solution to Problem

The invention provides a vehicular information collection system which collects information from a vehicle. The vehicular information collection system includes vehicle information output means for outputting vehicle information to a collection destination, presentation means for presenting a query relating to sensory evaluation based on the vehicle information output from the vehicle information output means to a driver, receiving means for receiving a driver's reply to the query presented by the presentation means, and reply output means for outputting the driver's reply received by the receiving means to the collection destination.

In this vehicular information collection system, the vehicle information output means outputs various kinds of vehicle information to the collection destination (for example, a vehicle manufacturer or a center which is operated by a vehicle manufacturer). In the vehicular information collection system, the presentation means presents a query relating to sensory evaluation based on the output vehicle information to the driver. For example, when the output vehicle information is information representing a vehicle state in which the driver feels a sense of discomfort, the presentation means presents a query on whether or not the driver feels a sense of discomfort to the driver. In the vehicular information collection system, the receiving means receives a reply to the presented query relating to sensory evaluation from the driver. If the receiving means receives the driver's reply, in the vehicular information collection system, the reply output means outputs the reply to the collection destination. As a result, in the collection destination, the vehicle information and the sensory evaluation of the driver corresponding to the vehicle information are obtained. In this way, in the vehicular information collection system, a query relating to sensory evaluation based on vehicle information is presented to request a reply from the driver, thereby collecting vehicle information taking the sensory evaluation of the driver into consideration.

In the vehicular information collection system of the invention, the collection destination is a center which is communicable with the vehicle, and the vehicle information output means and the reply output means perform transmission to the center.

In this vehicular information collection system, the collection destination of the vehicle information is the center, and the vehicle and the center are communicable with each other. Accordingly, in the vehicular information collection system, the vehicle information output means transmits vehicle information to the collection destination, and if the driver gives a reply to a query, the reply output means transmits the reply to the collection destination. As a result, in the center, the vehicle information and the sensory evaluation of the driver corresponding to the vehicle information are obtained in real time.

The invention provides a vehicular information collection system which collects information from a vehicle. The vehicular information collection system includes presentation means for presenting a query relating to sensory evaluation based on vehicle information to a driver, receiving means for receiving a driver's reply to the query presented by the presentation means, and storage means for storing the vehicle information in association with the driver's reply received by the receiving means.

In this vehicular information collection system, the presentation means presents a query relating to sensory evaluation based on vehicle information to the driver. In the vehicular information collection system, the receiving means receives a reply to the presented query relating to the sensory evaluation from the driver. If the receiving means receives the driver's reply, in the vehicular information collection system, the vehicle information and the reply are stored in the storage means. As a result, the storage means stores the vehicle information and the sensory evaluation of the driver corresponding to the vehicle information. Subsequently, it is possible for the dealer or the like to collect the vehicle information and the sensory evaluation corresponding to the vehicle information from the storage means. In this way, in the vehicular information collection system, a query relating to sensory evaluation based on vehicle information is presented to request a reply from the driver, thereby collecting vehicle information taking the sensory evaluation of the driver into consideration.

The vehicular information collection system of the invention may further include determination means for determining whether or not to present a query relating to sensory evaluation using the presentation means on the basis of previous and/or current operation of the driver on vehicle equipment.

In this vehicular information collection system, the determination means determines whether or not to present a query relating to the sensory evaluation on the basis of driver's operation on the vehicle equipment. It can be expected that a driver who willingly performs operation on the vehicle equipment gives a reply to the presented query, and the sensory evaluation of the driver is easily obtained. Meanwhile, it can be expected that a driver who does not perform operation on the vehicle equipment so much gives a reply to the presented query, and is likely to sense the query burdensome. Accordingly, in the vehicular information collection system, it is determined whether or not to present a query on the basis of the driver's operation on the vehicle equipment, thereby extracting a driver which is likely to give a reply to a query. As a result, it is possible to efficiently collect the sensory evaluation of the driver. It is also possible to reduce the burden of the driver resulting from a query.

In the vehicular information collection system of the invention, the determination means converts the driver's operation details and/or operation frequency on vehicle equipment to a score, and determines whether or not to present a query relating to sensory evaluation using the presentation means on the basis of the converted score.

In this way, in the vehicular information collection system, the operation details or operation frequency on the vehicle equipment is converted to a score to quantify the driver's willingness to the operation, thereby determining whether or not a driver is likely to give a reply to a query with ease and precision.

In the vehicular information collection system of the invention, the closer the driver's operation details in the receiving means is to the query presented by the presentation means, the greater the influence on the score is.

When a driver performs an operation to give a reply to the presented query or a similar operation, hereafter, it can also be expected that the driver willingly gives a reply to the presented query. Accordingly, in the vehicular information collection system, the influence on the score is greater, the closer the driver's operation details in the receiving means is to the query, thereby determining whether or not a driver is likely to give a reply to a query with precision.

In the vehicular information collection system of the invention, the operation of the vehicle equipment includes the driver's operation received by the receiving means in response to the query presented by the presentation means.

In this vehicular information collection system, determination is made along with information about whether or not a driver actually performs an operation to give a reply to the presented query, thereby determining whether or not a driver is likely to give a reply to a query with ease and precision.

In the vehicular information collection system of the invention, the vehicle equipment is a navigation device, and the determination means determines whether or not to present a query relating to sensory evaluation using the presentation means on the basis of changes of settings of the navigation device.

It can be expected that a driver who willingly changes the settings of the navigation device willingly gives a reply to the presented query. Accordingly, in this vehicular information collection system, it is determined whether or not to present a query relating to sensory evaluation using the presentation means on the basis of changes of settings of the navigation device, thereby determining whether or not a driver is likely to give a reply to query with precision.

In the vehicular information collection system of the invention, a presentation method in the presentation means is determined on the basis of the current driving conditions in the vehicle.

There are driving conditions where, even if a query is presented to a driver, it is difficult for the driver to give a reply (for example, a vehicle is traveling on a curve, or the condition that there are many peripheral vehicles) and the driver is likely to give a reply (for example, a vehicle is stopping at a red light or the like, or a vehicle is traveling on a straight track when that there are a small number of peripheral vehicles). The driving conditions that a driver can give a reply includes the driving condition that the driver can give a reply to a query displayed on the screen (for example, the vehicle is stopping at a red light or the like), and the driving condition that the driver can give a reply to a query output through speech (for example, the vehicle is traveling on a straight track when there are a small number of peripheral vehicles). Accordingly, in this vehicular information collection system, the presentation method in the presentation means is determined on the basis of the current driving conditions in the vehicle (including a case where a query cannot be presented), thereby presenting a query to the driver in accordance with the driving condition at that time (including a case where a query cannot be presented). Therefore, it is possible for the driver to secure vehicle driving safety, and to reduce the burden imposed on the driver resulting from a query when there is no margin for driving.

In the vehicular information collection system of the invention, after a query is presented by the presentation means, a driver's reply is received by the receiving means until a predetermined time elapses or until the vehicle travels a predetermined distance.

Even when the driver feels a sense of discomfort or the like with the vehicle state, as the time passes (as the vehicle travels), the driver becomes less sensitive. Accordingly, in this vehicular information collection system, after a query is presented by the presentation means, the driver's reply is received by the receiving means until a predetermined time elapses or until the vehicle travels a predetermined distance, thereby receiving a reply only while the driver is aware of a sense of discomfort or the like and collecting reliable sensory evaluation of the driver.

### Advantageous Effects of Invention

According to the invention, a query relating to sensory evaluation based on vehicle information is presented to request a reply from the driver, thereby collecting vehicle information taking the sensory evaluation of the driver into consideration.

### Brief Description of Drawings

Fig. 1 is a configuration diagram of a vehicular information collection system of this embodiment.
Fig. 2 shows an example of a traveling scene in which vehicle data and sensory evaluation of a driver are desired to be associated with each other.
Fig. 3 is a flowchart showing the flow of an operation in the vehicular information collection system of Fig. 1.
Fig. 4 is a configuration diagram of another form of a vehicular information collection system.
Fig. 5 is a configuration diagram of an in-vehicle device for determining a driver who can receive an inquiry according to this embodiment.
Fig. 6 shows an example of a point table of this embodiment.
Fig. 7 is a flowchart showing the flow of an operation in the in-vehicle device of Fig. 5.
Fig. 8 is a relationship diagram between collected vehicle data and sensory evaluation of a driver in the related art.

### Description of Embodiments

Hereinafter, an embodiment of a vehicular information collection system according to the invention will be described with reference to the drawings. In the respective drawings, the same or corresponding elements are represented by the same reference numerals, and overlapping description will be omitted.

In this embodiment, the vehicular information collection system according to the invention is applied to a vehicular information collection system which includes a vehicle (in particular, in-vehicle device), a vehicle manufacturer data analysis center (in particular, server), and a vehicle manufacturer operator center. In this embodiment, the overall vehicular information collection system in which characteristic vehicle data is collected by the center in association with sensory evaluation of a driver at that time will be described. An in-vehicle device for determining a driver who is likely to give a reply to an inquiry from the center will be described.

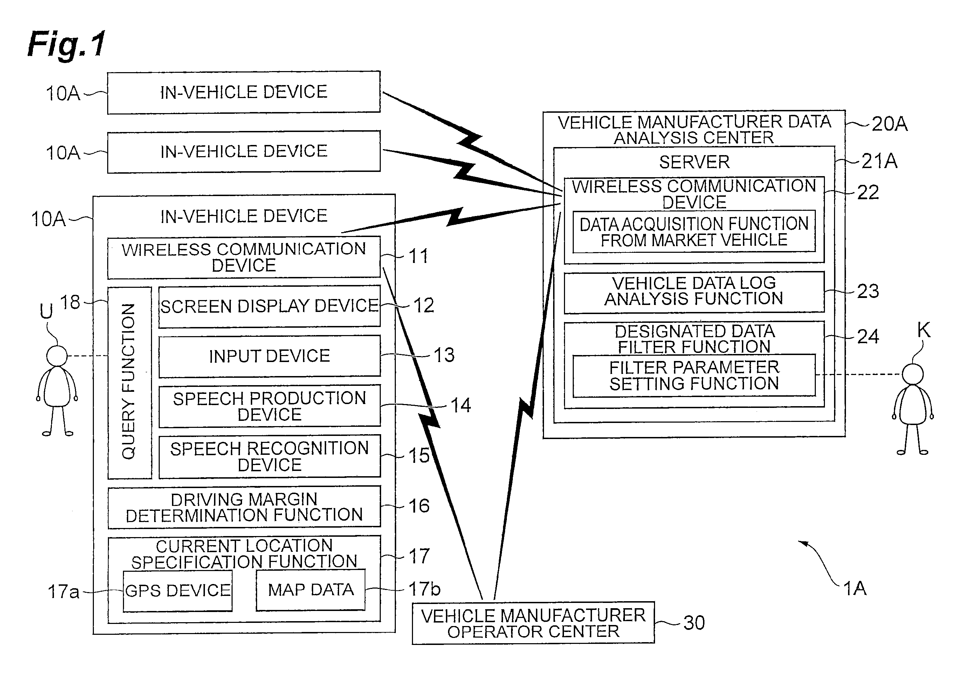

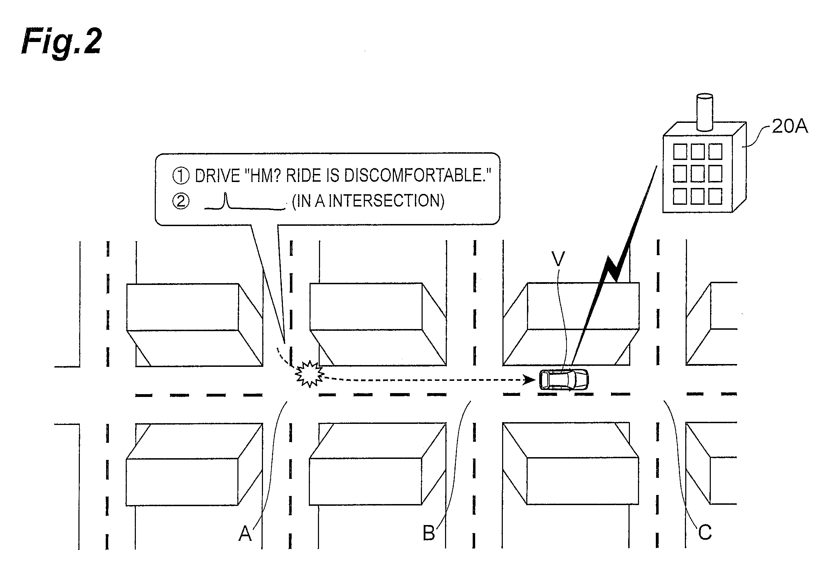

First, a vehicular information collection system 1A of this embodiment will be described with reference to Figs. 1 and 2. Fig. 1 is a configuration diagram of the vehicular information collection system of this embodiment. Fig. 2 shows an example of a traveling scene in which vehicle data and sensory evaluation of a driver are desired to be associated with each other.

In the vehicular information collection system 1A, various kinds of vehicle data are transmitted from in-vehicle devices 10A, 10A, 10A, ..., which are mounted in a number of vehicles on the market, to a vehicle manufacturer data analysis center 20A in real time. In the vehicle manufacturer data analysis center 20A (server 21A), vehicle data is monitored in real time for each vehicle, and characteristic data (data which is not obtained from the normal vehicle state (vehicle behavior)) is extracted. In order to improve ride quality, vehicle performance, or the like, the vehicle manufacturer wants to know the feeling of the driver when the characteristic data is detected. Accordingly, in order to analyze the characteristic data in association with the sensory evaluation of the driver at that time, a query is presented from the vehicle manufacturer data analysis center 20A to a vehicle manufacturer operator center 30. In the vehicle manufacturer operator center 30, a query relating to sensory evaluation is transmitted to the corresponding vehicle (in-vehicle device 10A). In the in-vehicle device 10A, on the driving condition that a query is possible, the query is presented to the driver, and when a reply is obtained from the driver, the reply is transmitted to the vehicle manufacturer data analysis center 20A. In the vehicle manufacturer data analysis center 20A (server 21A), the characteristic data is stored in a database in association with the driver's reply (sensory evaluation), and analysis is performed.

For example, in a traveling scene shown in Fig. 2, a driver of a vehicle V feels a sense of discomfort with ride quality at an A intersection. In the vehicle manufacturer data analysis center 20A, characteristic data at the A intersection is detected from vehicle data collected from the vehicle V. The vehicle manufacturer data analysis center 20A wants to analyze data in which the characteristic data and the sensory evaluation of the driver are associated with each other. To this end, in the vehicle manufacturer data analysis center 20A, a query is asked to the driver of the vehicle V through the vehicle manufacturer operator center 30, and in order to receive a reply while the driver is aware of (feels) a sense of discomfort, the sensory evaluation of the driver is collected after the vehicle V is away from the A intersection. At this time, a query is asked when the vehicle V stops at a red light at the next intersection B, another C intersection, or the like such that a burden is not imposed on the driver.

First, the in-vehicle device 10A will be described. In the in-vehicle device 10A, various kinds of vehicle data are transmitted to the vehicle manufacturer data analysis center 20A in real time. In the in-vehicle device 10A, when a query relating to the sensory evaluation of the driver is transmitted from the vehicle manufacturer operator center 30, a driving margin based on the driving condition is determined, and when the driving margin is high, a query is executed to the driver. In the in-vehicle device 10A, when the driver gives a reply to the query within a given time or during a given distance movement, the reply is transmitted to the vehicle manufacturer data analysis center 20A.

To this end, the in-vehicle device 10A includes a wireless communication device 11, a screen display device 12, an input device 13, a speech production device 14, a speech recognition device 15, a driving margin determination function 16, a current location specification function 17, and a query function 18. The driving margin determination function 16, the current location specification function 17, and the query function 18 are functions which are executed by an ECU [Electronic Control Unit] mounted in the vehicle. In this embodiment, the wireless communication device 11 corresponds to vehicle information output means and reply output means described in the appended claims, the screen display device 12, the speech production device 14, and the query function 18 correspond to presentation means described in the appended claims, and the input device 13, the speech recognition device 15, and the query function 18 correspond to receiving means described in the appended claims.

The wireless communication device 11 is a device which is used to perform wireless communication with the vehicle manufacturer data analysis center 20A or the vehicle manufacturer operator center 30. In the wireless communication device 11, vehicle data which flows in a CAN [Controller Area Network] is transmitted to the vehicle manufacturer data analysis center 20A in real time. The CAN is a LAN in the vehicle. Various ECUs which are mounted in the vehicle are connected to the CAN, and vehicle data which is output from the respective ECU (various sensors which are connected to the ECUs) flows in the CAN. Vehicle data is, for example, data relating to a vehicle state (in particular, vehicle behavior), and includes longitudinal acceleration, lateral acceleration, roll, or the like. Current location information of the vehicle specified by the current location specification function 17 is added to vehicle data to be transmitted. When the driver gives a reply to a query, in the wireless communication device 11 transmits the reply to the vehicle manufacturer data analysis center 20A. The wireless communication device 11 receives a query from the vehicle manufacturer operator center 30.

The screen display device 12 is a device which can display at least letters, and is, for example, a display device which is mounted in the vehicle. For example, the screen display device 12 displays the query details on the screen in response to a display signal from the query function 18. The input device 13 is a device which is used when the driver performs input operation, and is, for example, a touch panel which is provided in a display device. For example, the input device 13 receives an operation of the driver for a reply to the query displayed on the screen display device 12. The speech production device 14 is a device which produces speech. For example, the speech production device 14 speaks the query details in response to a speech signal from the query function 18. The speech recognition device 15 is a device which recognizes speech. For example, the speech recognition device 15 recognizes speech of a driver's reply to a query spoken by the speech production device 14.

The driving margin determination function 16 determines a driving margin based on the driving condition when a query is transmitted from the vehicle manufacturer operator center 30. The driving margin determination function 16 determines whether or not a query is executed in accordance with the driving margin or whether or not a query can be displayed on the screen when the query can be executed. The determination of the driving margin is made in a stepwise manner on the basis of the road shape, the conditions of peripheral obstacles (for example, vehicles and pedestrians), traffic signal information, crossing information, congestion information, and the like. for example, when the vehicle stops at a red light, a crossing, or the like (in particular, the vehicle stops for a long time such that the driver can recognize a query displayed on the screen and can give a reply to the query), it is determined that the driving margin is high. While the vehicle is traveling, when the vehicle travels on a straight line and there is no or few peripheral obstacles (when safety is high while the vehicle is traveling), it is determined that the driving margin is about middle. When there are peripheral obstacles, when the vehicle is traveling on a curve, or the like, it is determined that the driving margin is low. When the driving margin is high, it is determined that a query through screen display is possible. When the driving margin is about middle, it is determined that a query through speech is possible. When the driving margin is low, it is determined that a query is impossible.

The current location specification function 17 specifies the current location of the vehicle using GPS signals received by a GPS [Global Positioning System] device 17a, map data 17b, or the like. The current location specification function 17 may be one of the functions of a navigation device which is mounted in the vehicle.

When a query is transmitted from the vehicle manufacturer operator center 30, the query function 18 executes/stops the query in accordance with the determination result of the driving margin determination function 16. When the driving margin determination function 16 determines that a query can be executed through screen display, the query function 18 converts transmitted query data to data which can be displayed on the screen and transmits the display signal to the screen display device 12. The query function 18 also converts the transmitted query data to data which can be spoken and transmits the speech signal to the speech production device 14. When the driving margin determination function 16 determines that a query can be executed through speech, the query function 18 converts the transmitted query data to data which can be spoken and transmits the speech signal to the speech production device 14. When an operator asks a query from the vehicle manufacturer operator center 30, and when the driving margin determination function 16 determines that the query is possible, the query of the operator is spoken directly from the speech production device 14.

When a query is executed, the query function 18 receives a reply to the query within a given time or during a given distance movement after the query is executed. When a query is asked through screen display, a reply is received by the input device 13 and the speech recognition device 15 within a given time or during a given distance movement. When a query is asked through only speech, a reply is received only by the speech recognition device 15 within a given time or during a given distance movement. When a reply is received by the input device 13 or the speech recognition device 15, the query function 18 converts the received reply to data which can be recognized by the vehicle manufacturer data analysis center 20A, and transmits the data through the wireless communication device 11. The given time or the given distance is the time or distance at which the driver is properly aware of a sense of discomfort or the like with vehicle behavior. If the time or distance is exceeded, accurate sensory evaluation of the driver is not obtained. The given time or given distance is the time or distance at which reliable synchronization with characteristic vehicle data is made, and if the vehicle is excessively away from a target intersection or the like, synchronization is not made. The given time or given distance may be set in advance by experiment or the like. The given time or given distance may be set taking the memory capacity of vehicle data for each vehicle in the vehicle manufacturer data analysis center 20A.

The vehicle manufacturer data analysis center 20A (in particular, server 21A) will be described. In the sever 21A of the vehicle manufacturer data analysis center 20A, vehicle data is transmitted from the in-vehicle device 10A for each vehicle. In the server 21A, the received vehicle data is analyzed in real time, and when the vehicle data satisfies filter conditions (a filter for detecting characteristic data), a command (characteristic data may be added) for asking a query to the driver of the corresponding vehicle is transmitted to the vehicle manufacturer operator center 30. When the in-vehicle device 10A of the corresponding vehicle transmits a reply to the query, in the server 21A, the reply (the sensory evaluation of the driver) is received, and characteristic data is stored in a database (not shown) in association with the sensory evaluation. In the server 21A, associated characteristic data and sensory evaluation collected from a plurality of vehicles are analyzed. To this end, the server 21A includes a wireless communication device 22, a vehicle data log analysis function 23, and a designated data filter function 24.

The wireless communication device 22 is a device which is used to perform wireless communication with the in-vehicle device 10A or the vehicle manufacturer operator center 30. The wireless communication device 22 receives vehicle data transmitted from the in-vehicle device 10A of each vehicle. When the in-vehicle device 10A of the vehicle which asks a query transmits reply data, the wireless communication device 22 receives reply data. The wireless communication device 22 transmits a command for asking a query to the corresponding vehicle to the vehicle manufacturer operator center 30.

The vehicle data log analysis function 23 analyzes the waveform shape or the like from the log of collected vehicle data in real time for each vehicle. Vehicle data to be analyzed is at least vehicle data designated by designated data filter function 24 from among various kinds of vehicle data transmitted from the in-vehicle device 10A.

The designated data filter function 24 determines whether or not the filter conditions of designated data set by an analyzer K of the vehicle manufacturer is satisfied on the basis of the analysis result in the vehicle data log analysis function 23. The analyzer K of the vehicle manufacturer designates vehicle data (for example, data relating to vehicle behavior) to be analyzed in advance, and sets filter conditions (filter parameters) for catching a specific waveform, a specific value, or the like, which does not appear during normal traveling, in the vehicle data. For example, a threshold value for catching instantaneous large acceleration is set as a filter parameter value. This setting is performed by, for example, an expert or a specialist which resides in the vehicle manufacturer data analysis center 20A.

The vehicle manufacturer operator center 30 will be described. The vehicle manufacturer operator center 30 includes the same wireless communication device as in the vehicle manufacturer data analysis center 20A, and a communication device which is used when the operator makes a voice call. In the vehicle manufacturer operator center 30, when a command (characteristic data may be added) for asking a query to a driver of a certain vehicle is received from the vehicle manufacturer data analysis center 20A, a query for listening to the feeling of the driver for vehicle behavior or the like which is postulated with respect to characteristic data is generated. A query is automatically extracted from query text data prepared in correspondence to characteristic data or is created by the operator in correspondence to characteristic data. A query is preferably a query to which the driver can easily give a reply, such as YES/NO. For example, a query "While characteristic data is detected on the center side some time ago, do you have any problem with ride quality? If there is a problem, which of the A intersection and the B intersection has the problem?" is used.

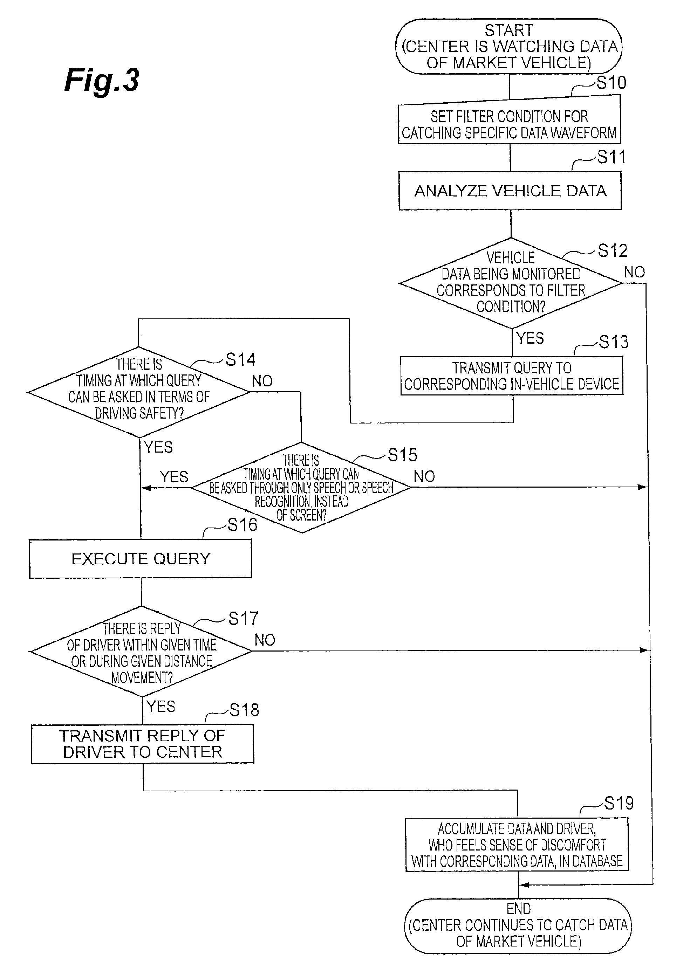

An operation in the vehicular information collection system 1A will be described with reference to Fig. 1 along a flowchart of Fig. 3. Fig. 3 is a flowchart showing the flow of an operation in the vehicular information collection system of Fig. 1.

In each vehicle, various kinds of vehicle data are transmitted from the in-vehicle device 10A to the vehicle manufacturer data analysis center 20A in real time. The server 21A of the vehicle manufacturer data analysis center 20A constantly monitors vehicle data and receives vehicle data each time vehicle data is transmitted from the in-vehicle device 10A. In the server 21A, a filter condition for catching a specific data waveform or the like from designated data is set in advance by the data analyzer (S10).

The server 21A analyzes the received vehicle data in real time for each vehicle (S11) and determines whether or not the designated data being monitored corresponds to the filter condition (S 12). When it is determined in S12 that there is no vehicle data which corresponds to the filter condition, the current process ends.

When it is determined in S12 that there is vehicle data which corresponds to the filter condition, the server 21A transmits a command for asking a query to a vehicle, which transmits the corresponding vehicle data, to the vehicle manufacturer operator center 30. When receiving this command, the vehicle manufacturer operator center 30 creates a query and transmits the query to the in-vehicle device 10A of the corresponding vehicle (S 13).

When receiving this query, the in-vehicle device 10A determines a driving margin and determines whether or not there is the timing at which a query can be asked to the driver in terms of driving safety (in particular, including the screen) (S14). When it is determined in S 14 that there is no timing at which a query can be asked, the in-vehicle device 10A determines whether or not there is the timing at which a query can be asked through only speech or speech recognition, instead of the screen (S 15). When it is determined in S 15 that there is no timing at which a query can be asked through speech, the in-vehicle device 10A transmits query-incapable information to the server 21A of the vehicle manufacturer data analysis center 20A. When receiving this query-incapable information, the server 21A ends the current process.

When it is determined in S 14 that there is the timing at which a query can be asked, the in-vehicle device 10A displays the transmitted query on the screen at this timing and produces speech (S16). Alternatively, when it is determined in S15 that there is the timing at which a query can be asked through only speech, the in-vehicle device 10A speaks the transmitted query at this timing (S16).

When a query is executed in S16, the in-vehicle device 10A waits for input operation or speech of a reply from the driver and determines whether or not there is a reply within a given time or during a given distance movement (S 17). When it is determined in S 17 that there is no reply within a given time or during a given distance movement, the in-vehicle device 10A transmits no-reply information to the server 21A of the vehicle manufacturer data analysis center 20A. If the server 21A receives the no-reply information, the vehicular information collection system 1A ends the current process. The determination of S 17 is made taking into consideration the time or movement distance until a query is actually executed at the timing at which a query can be asked after the query is transmitted from the center (for example, the timing at which the vehicle stops at a red light).

When it is determined in S17 that there is a reply within a given time or during a given distance movement, the in-vehicle device 10A converts the input operation of the driver's reply to reply data or recognizes the speech of the driver's reply and converts the speech to reply data, and transmits the reply data to the server 21A of the vehicle manufacturer data analysis center 20A (S18). When receiving this reply data, the server 21A accumulates characteristic data satisfying the filter condition of the query target in the database in association with the reply (the sensory evaluation of the driver) (S 19). The database accumulates data relating to a certain driver feels a sense of discomfort with certain data. In order to reduce the sense of discomfort of the driver, the server 21A analyzes data which is accumulated in the database.

According to this vehicular information collection system 1A, when characteristic vehicle data is detected, a query relating to sensory evaluation based on the characteristic vehicle data is presented to request a reply from the driver, thereby performing data collection by associating characteristic vehicle data with the sensory evaluation of the driver at this time.

According to the vehicular information collection system 1A, even when there is a query, the driving margin is determined, and when there is no problem in terms of driving safety, the query is asked. Accordingly, it is possible to present a query to the driver in accordance with the driving condition at this time (a query may not be presented), and to secure vehicle driving safety. It is also possible to prevent the burden imposed on the driver resulting from a query when there is no margin for driving. In particular, in the vehicular information collection system 1A, since a query through the screen, a query through only speech, and query-incapable is determined in a stepwise manner in accordance with the driving margin, even when a query is executed, it is possible to execute a query to the driver in an optimum form taking vehicle driving safety into consideration.

According to the vehicular information collection system 1A, when a query is executed, a driver's reply is received within a given time or during a given distance movement, thereby receiving a reply only while the driver is aware of a sense of discomfort or the like. Therefore, it is possible to collect reliable sensory evaluation of the driver and to realize synchronize the sensory evaluation of the driver with characteristic data.

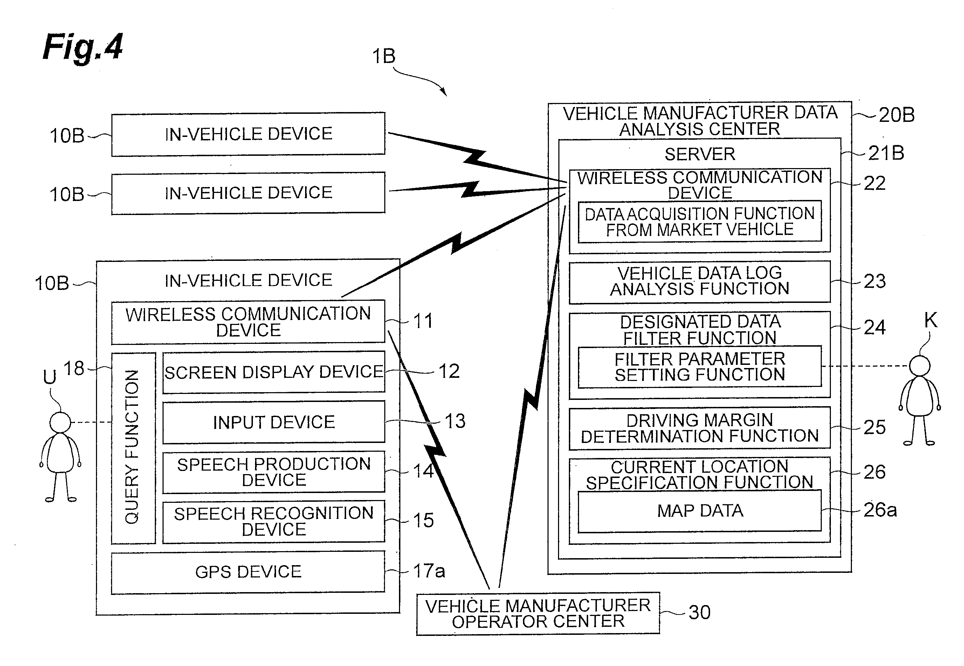

As a vehicular information collection system, the configuration of a vehicular information collection system 1 B shown in Fig. 4 may be provided. This vehicular information collection system 1B is different from the configuration of the vehicular information collection system 1A in that a driving margin determination function 25 and a current location specification function 26 (map data 26a) are provided in a server 21B of a vehicle manufacturer data analysis center 20B, and a GPS device 17a for receiving GPS signals necessary for specifying the current location of the vehicle is provided in an in-vehicle device 10B. With this configuration, the in-vehicle device 10B can basically include only an input/output device, and is of a thin client type, thereby reducing the processing burden or memory capacity.

In the above-described vehicular information collection system 1A or 1B, when a query is asked to a driver of a vehicle, there are a driver who willingly gives a reply to the query and a driver who does not give a reply. Accordingly, while the drivers of all vehicles when characteristic data can be detected are inquired, in order to efficiently collect data of the sensory evaluation of the driver, it is preferable that only drivers who willingly give a reply are inquired. Description will be provided as to an in-vehicle device mounted with a function of estimating (determining) a driver of high literacy (of interest) who can be inquired.

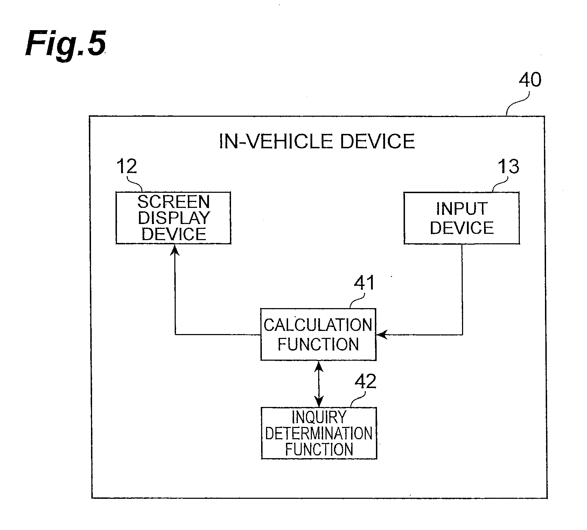

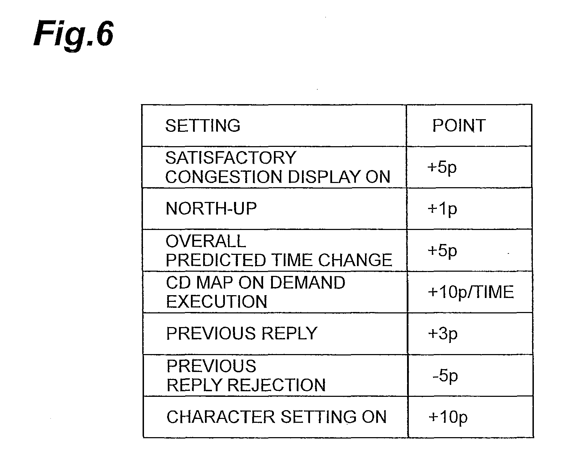

An in-vehicle device 40 for determining a driver who can be inquired according to this embodiment will be described with reference to Figs. 5 and 6. Fig. 5 is a configuration diagram of an in-vehicle device for determining a driver who can be inquired according to this embodiment. Fig. 6 shows an example of a point table according to this embodiment.

In the in-vehicle device 40, the driver's operation (operation details and operation frequency) on the vehicle equipment is evaluated by points, and it is determined whether or not a driver can be inquired on the basis of the total value of the points of the driver's previous and current actual operations (only previous operations or only current operations). When the in-vehicle device 40 determines that a driver can be inquired, information indicating that a driver can be inquired may be transmitted to the center (in this case, a query is transmitted to the vehicle of the driver). Alternatively, when the in-vehicle device receives a query from the center, the query may be received. Meanwhile, when it is determined that a driver cannot be inquired, information indicating that a driver cannot be inquired may be transmitted to the center (in this case, a query is not transmitted to the vehicle of the driver). Alternatively, a query received by the in-vehicle device from the center may be received. In this embodiment, the point corresponds to the score described in the appended claims.

To this end, the in-vehicle device 40 includes a screen display device 12, an input device 13, a calculation function 41, and an inquiry determination function 42. The calculation function 41 and the inquiry determination function 42 are functions which are executed by the ECU mounted in the vehicle. The driver's operation may include a reply or an operation through speech to be recognized by sound recognition as well as an operation on the input device 13. In this embodiment, the calculation function 41 and the inquiry determination function 42 correspond to determination means described in the appended claims. The screen display device 12 and the input device 13 are the same as the screen display device 12 and the input device 13 of the in-vehicle device 10A described above, thus description thereof will be omitted.

In regard to a setting operation, such as character setting enable, in which the driver makes a change under conditions or an operation in which it is determined that the vehicle equipment is used well, the point of the operation on the vehicle equipment is set to be high. In regard to an operation of a reply to an inquiry (for example, a query from the center) from the device through screen display or speech, or a similar operation, the point may be set to be high. In regard to an inquiry to the driver, a character may inquire on the screen, such that the driver wants to answer. In this embodiment, it is estimated that the higher the point, the higher the literacy of the driver.

As the operation on the vehicle equipment, for example, there are operations of settings of a navigation device. An example of points which are set about the setting operations of the navigation device will be described with reference to Fig. 6. When an operation to turn on satisfactory congestion display is performed, +5 point is set. When a north-up operation of a map is performed, +1 point is set. When an overall predicted time change operation is performed, +5 point is set. When an operation to execute CD map on demand is performed, 10 points per time are set. When there is a previous reply to an inquiry from the device, +3 point is set. When there is no previous reply to an inquiry from the device, -5 point is set. When an operation to turn on character setting is performed, +10 point is set. In regard to these operations, the in-vehicle device 40 may set the points in accordance with the operation frequency from the past of the same setting operation. In regard to the character setting or the like, as the setting is made in more detail, a higher point may be set.

The calculation function 41 totalizes the points of the driver's actual operations on the input device 13 for the settings displayed on the screen display device 12 on the basis of the points which are set about the operations on the vehicle equipment. The points of only the current setting operations may be totalized, or the points of operations (with the operation frequency) during a predetermined period of the past from the present time may be totalized.

The inquiry determination function 42 determines whether or not the point totalized by the calculation function 41 is equal to or greater than a reference. When the totalized point is equal to or greater than the reference, the inquiry determination function 42 estimates that the literacy of the driver is high, and determines that the driver can be inquired. In this reference determination, an absolute threshold value relative to the point may be provided, and it may be determined whether or not the point of the driver is equal to or greater than the threshold value, or it may be determined whether or not the point of the driver falls within a specified number of high-ranking people from among all subject drivers.

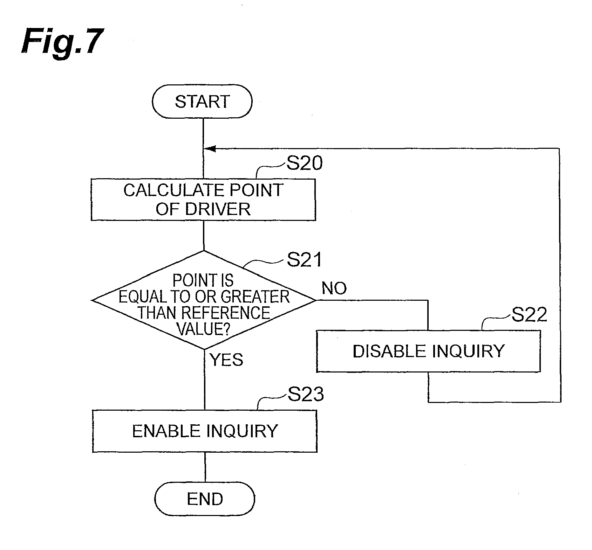

An operation in the in-vehicle device 40 will be described with reference to Fig. 5 along a flowchart of Fig. 7. Fig. 7 is a flowchart showing the flow of an operation in the in-vehicle device of Fig. 5.

The in-vehicle device 40 calculates the point of the driver on the basis of the driver's operations on the input device 13 (S20). Then, the in-vehicle device 40 determines whether or not the point of the driver is equal to or greater than the reference (S21).

When it is determined in S21 that the point is smaller than the reference, the in-vehicle device 40 determines that the driver cannot be inquired and returns to S20. When it is determined in S21 that the point is equal to or greater than the reference, the in-vehicle device 40 determines that the driver can be inquired (S23).

According to this in-vehicle device 40, it is determined whether or not a driver can be inquired on the basis of the driver's operations on the vehicle equipment, thereby extracting drivers of high literacy who are likely to give a reply to a query from the center. Accordingly, it is possible to efficiently collect the sensory evaluation of the driver. It is also possible to prevent the burden imposed on a driver of low literacy resulting from the query.

The in-vehicle device 40 evaluates the operation details or operation frequency on the vehicle equipment by point, thereby determining whether or not a driver can be inquired with ease and precision. The in-vehicle device 40 increases the point as an operation is close to an operation of a reply to an inquiry from the device, thereby determining whether or not a driver can be inquired with precision. The in-vehicle device 40, an operation of a reply to a query from the device is included in the point, thereby determining whether or not a driver can be inquired with precision.

Although the embodiment of the invention has been described, the invention is not limited to the foregoing embodiment and may be carried out in various forms.

For example, although in this embodiment, the invention is applied to a vehicular information collection system which includes a vehicle (in-vehicle device), a vehicle manufacturer data analysis center (server), and a vehicle manufacturer operator center, and the vehicle manufacturer data analysis center collects vehicle data or sensory data in real time through wireless communication, the vehicular information collection system may be constructed in other forms. For example, a vehicle data analysis function, a filter function for extracting. characteristic data, and a function of generating a query corresponding to characteristic data may be provided in the in-vehicle device of the vehicle. In the in-vehicle device, vehicle data and sensory evaluation are associated with each other, and the associated vehicle data and sensory evaluation are stored in a storage device. A dealer or the like collects data, in which vehicle data and sensory evaluation are associated with each other, from the storage device of the in-vehicle device later.

Although in this embodiment, the vehicle manufacturer operator center generates a query and transmits the query to the in-vehicle device, the vehicle manufacturer operator center may not be provided. In this case, the server of the vehicle manufacturer data analysis center may generate a query, and the query may be directly transmitted from the server to the in-vehicle device.

Although in this embodiment, vehicle data associated with current position information is transmitted from the vehicle to the center, vehicle data not associated with current position information may be transmitted. For example, when analyzing vehicle data relating to steering characteristic, deceleration characteristic, acceleration characteristic, or the like and the sensory evaluation of the driver, current position information may not be provided.

Although in this embodiment, the driving margin is determined, and when the driving margin is high, a query is asked to the driver, this configuration may not be provided. Although a query is asked in a stepwise manner through screen display and speech output in accordance with the driving margin, it may be determined only whether or not a query may be asked in accordance with the driving margin.

Although in this embodiment, a function of determining whether or not a driver can be inquired is provided in the in-vehicle device, various kinds of setting information of the navigation device or the like may be transmitted from the in-vehicle device to the center, and the center may determine whether or not a driver can be inquired.

### Industrial Applicability

According to the invention, in the vehicular information collection system which collects information from a vehicle, a query relating to sensory evaluation based on vehicle information is presented to request a reply from a driver, thereby collecting vehicle information taking the sensory evaluation of the driver into consideration.

### Reference Signs List

1A, 1B: vehicular information collection system, 10A, 10B, 40: in-vehicle device, 11: wireless communication device, 12: screen display device, 13: input device, 14: speech production device, 15: speech recognition device, 16: driving margin determination function, 17: current location specification function, 17a: GPS device, 17b: map data, 18: query function, 41: calculation function, 42: inquiry determination function, 20A, 20B: vehicle manufacturer data analysis center, 21A, 21B: server, 22: wireless communication device, 23: vehicle data log analysis function, 24: designated data filter function, 30: vehicle manufacturer operator center, 25: driving margin determination function, 26: current location specification function, 26a: map data.

## Claims

1. A vehicular information collection system which collects information from a vehicle, the vehicular information collection system comprising:
vehicle information output means for outputting vehicle information to a collection destination;
presentation means for presenting a query relating to sensory evaluation based on the vehicle information output from the vehicle information output means to a driver;
receiving means for receiving a driver's reply to the query presented by the presentation means; and
reply output means for outputting the driver's reply received by the receiving means to the collection destination.

2. The vehicular information collection system according to claim 1,
wherein the collection destination is a center which is communicable with the vehicle, and
the vehicle information output means and the reply output means perform transmission to the center.

3. A vehicular information collection system which collects information from a vehicle, the vehicular information collection system comprising:
presentation means for presenting a query relating to sensory evaluation based on vehicle information to a driver;
receiving means for receiving a driver's reply to the query presented by the presentation means; and
storage means for storing the vehicle information in association with the driver's reply received by the receiving means.

4. The vehicular information collection system according to any one of claims 1 to 3, further comprising:
determination means for determining whether or not to present a query relating to sensory evaluation using the presentation means on the basis of previous and/or current operation of the driver on vehicle equipment.

5. The vehicular information collection system according to claim 4,
wherein the determination means converts the driver's operation details and/or operation frequency on vehicle equipment to a score, and determines whether or not to present a query relating to sensory evaluation using the presentation means on the basis of the converted score.

6. The vehicular information collection system according to claim 5,
wherein, the closer the driver's operation details in the receiving means is to the query presented by the presentation means, the greater the influence on the score is.

7. The vehicular information collection system according to any one of claims 4 to 6,
wherein the operation of the vehicle equipment includes the driver's operation received by the receiving means in response to the query presented by the presentation means.

8. The vehicular information collection system according to any one of claims 4 to 7,
wherein the vehicle equipment is a navigation device, and
the determination means determines whether or not to present a query relating to sensory evaluation using the presentation means on the basis of changes of settings of the navigation device.

9. The vehicular information collection system according to any one of claims 1 to 8,
wherein a presentation method in the presentation means is determined on the basis of the current driving conditions in the vehicle.

10. The vehicular information collection system according to any one of claims 1 to 9,
wherein, after a query is presented by the presentation means, a driver's reply is received by the receiving means until a predetermined time elapses or until the vehicle travels a predetermined distance.
